# EUROPEAN PATENT SPECIFICATION

(11) **EP 3 774 479 B1**
(45) Date of publication and mention of the grant of the patent: **05.11.2025**
(21) Application number: 19702261.9
(22) Date of filing: 30.01.2019
(51) Int. Cl.: B60W 50/00, B60W 40/04

(54) **METHOD AND SYSTEM FOR DETERMINING ADVANCED DRIVER ASSISTANCE SYSTEMS (ADAS) FEATURES**
VERFAHREN UND SYSTEM ZUR BESTIMMUNG DER MERKMALE FORTGESCHRITTENER FAHRERASSISTENZSYSTEME (ADAS)
PROCÉDÉ ET SYSTÈME POUR LA DÉTERMINATION DE CARACTÉRISTIQUES DE SYSTÈMES D'AIDE À LA CONDUITE AVANCÉS (ADAS)

(30) Priority: 28.03.2018 GB 201804972
(43) Date of publication of application: 17.02.2021
(73) Proprietor: Auto Records Ltd, Clane, Co. Kildare (IE)
(72) Inventor: AHERNE, Jeff, Clane Co. Kildare (IE); BYRNE, John, Clane Co. Kildare (IE)
(74) Representative: FRKelly
(86) International application number: PCT/EP2019/052204
(87) International publication number: WO 2019/185217

(56) References cited:
- EP-A1- 2 995 519
- EP-A1- 3 253 084
- WO-A1-2017/147007
- US-A1- 2017 248 441

## Description

### Field of the Invention

The present invention relates to Advanced Driver Assistance Systems (ADAS). More particularly, it relates to a method and system for autonomous vehicles to determine Advanced Driver Assistance Systems (ADAS) features of other vehicles in their environment.

### Background of the Disclosure

Advanced driver assistance systems (ADAS) function to automate, adapt and/or enhance vehicle systems for safety and better driving by a human driver. Safety features are designed to avoid collisions and accidents by offering technologies that alert drivers to potential problems, or to avoid collisions by implementing safeguards and ultimately taking over control of the vehicle from the human driver. Adaptive features may automate lighting, provide adaptive cruise control, automate braking, incorporate GPS/traffic warnings, connect to smart devices, alert drivers to other vehicles or dangers, keep the driver in the correct lane, or show what is in blind spots.

Automatic number-plate recognition (ANPR) is a technology that uses optical character recognition of images to read vehicle registration plates. ANPR can use existing closed-circuit television, road-rule enforcement cameras, or cameras specifically designed for the task. ANPR is used by police forces for law enforcement purposes, including to check if a vehicle is registered or licensed. It is also used for electronic toll collection on pay-per-use roads and as a method of cataloguing the movements of traffic, for example by highways agencies. ANPR cameras currently rely on retrieval of a full vehicle registration number from the vehicle registration plate for identification of the vehicle, and otherwise return a null response.

Autonomous vehicles are vehicles that are capable of sensing their environment and navigating without human input. Autonomous vehicles use a variety of techniques to detect their surroundings, such as radar, laser light, GPS, odometry and computer vision. Advanced control systems function to interpret sensory information to identify appropriate navigation paths, as well as obstacles and relevant signage. Autonomous vehicles must have control systems that are capable of analyzing sensory data to distinguish between different vehicles on the road.

There are five levels of autonomy ranging from Level 0 - Automated system issues warnings and may momentarily intervene but has no sustained vehicle control, to Level 5 - No human intervention is required. Highly Autonomous Vehicles (HAV) are classified as Level 4 and above. HAVs do not use ADAS as ADAS are driver assistance features designed to assist a human driver and a HAV does not require a human driver. Highly Autonomous Vehicles (HAV) read the position of other objects within their ambit using a light detection and ranging function known as Lidar which sits on the vehicle and communicates the position of other vehicles to determine distances, obstructions, hazards and permits HAVs to change speed or direction as required to comply with local road traffic regulations and road user safety.

WO 2017/147007 A1 discloses systems and methods for sharing and visualizing vehicle profiles to enable a driver to select a vehicle to follow. In accordance with an embodiment the method comprises receiving from each vehicle of a plurality of nearby vehicles, information regarding respective vehicle route and vehicle sensor capabilities; based on the received information, determining whether (i) at least one vehicle sensor capability of a first vehicle in the plurality of nearby vehicles exceeds a corresponding sensor capability of a follower vehicle, and whether (ii) the route of the first vehicle comprises at least a portion of a planned route of the follower vehicle; and in response to the determination, causing the follower vehicle to follow the first vehicle for the portion of the route.

In US 2017/248441 A1, in order to support the driving of an ego-vehicle, the following steps are carried out: gathering information from the environment of the ego-vehicle; processing the gathered information, in such a way that it is detected whether a neighboring vehicle is in the environment of the ego-vehicle, and if a neighboring vehicle is detected, additionally gathering and/or processing information relating to the neighboring vehicle in order to assign at least one typical attribute to the neighboring vehicle; and, according to the at least one typical attribute of the neighboring vehicle, providing control information for driving the ego-vehicle.

In view of the above-described technologies, there is a need for an improved system for HAVs to adapt to different vehicles which are not highly autonomous and to other obstacles in their vicinity.

### Summary of the Invention

These and other problems are addressed by providing a method for determining Advanced Driver Assistance Systems features in a first vehicle and making adjustments to the speed and direction of an autonomous second vehicle, as detailed in claim 1 and a system as detailed in claim 14. Advantageous features are provided in dependent claims.

Generally, the present invention provides a method and system for autonomous vehicles to establish the ADAS features of non-autonomous vehicles in their environment. In one embodiment, the method and system of the present invention applies an ANPR solution to differentiate between the individual attributes of a particular vehicle in the ambit of a HAV other than physical attributes. The method and system of the present invention can supply critical data to a HAV via an advanced ANPR system which allows the HAV to differentiate between vehicles within its physical ambit which have ADAS features over vehicles which do not have ADAS features and to communicate in real time those features to the HAV.

These and other features will be better understood with reference to the following figures which are provided to assist in an understanding of the present teaching, by way of example only.

### Brief Description of the Drawings

Figure 1 is a flowchart illustrating a method of determining Advanced Driver Assistance Systems (ADAS) features, according to an embodiment of the present disclosure;
Figure 2 is a block diagram illustrating a system for determining Advanced Driver Assistance Systems (ADAS) features, according to an embodiment of the present invention; and
Figure 3 is a block diagram illustrating a configuration of a computing device which includes various hardware and software components that function to perform processes according to embodiments of the present invention.

### Detailed Description

Embodiments of the present invention will now be described with reference to some exemplary apparatus and systems described herein. It will be understood that the embodiments described are provided to assist in an understanding of the present invention and are not to be construed as limiting in any fashion. The scope of the present invention is defined in the appended claims.

Highly Autonomous Vehicles (HAV) are configured with the capability to self-drive by Original Equipment Manufacturers (OEM) and are capable of this autonomous driving via Vehicle to External (V2X) or Vehicle to Vehicle (V2V) communication.

The present invention provides a method and system for determining Advanced Driver Assistance Systems (ADAS) features in a first vehicle, the method comprising operating a computing device configured to: receive one or more identifiers of the first vehicle; identify the first vehicle based on the one or more identifiers; and determine from a vehicle database whether the identified first vehicle has ADAS features. The method may be used for autonomous vehicles to establish the ADAS features of non-autonomous vehicles in their environment. For example, a HAV may determine the ADAS features of the first vehicle which is within the ambit of the HAV.

The computing device may reside on a cloud-based computer. The method may comprise transmitting the result of determining whether the identified first vehicle has ADAS features to a second vehicle. The second vehicle may communicate with the computing device via a Vehicle-to-External (V2X) communication capability. The second vehicle may also communicate with the vehicle databse via a Vehicle-to-External (V2X) communication capability. The second vehicle may be a Highly Autonomous Vehicle (HAV). The result of determining whether the identified first vehicle has ADAS features may comprise determining that the first vehicle is a Highly Autonomous Vehicle (HAV), in which case the first vehicle does not have ADAS features. The result of determining whether the identified first vehicle has ADAS features may comprise determining that the first vehicle is a vehicle equipped with ADAS which is not a HAV, or a vehicle which is not equipped with ADAS and which is not a HAV.

In another embodiment, the second computing device may be disposed in the second vehicle. In this embodiment, the method may comprise receiving the result of determining whether the identified first vehicle has ADAS features at the second vehicle.

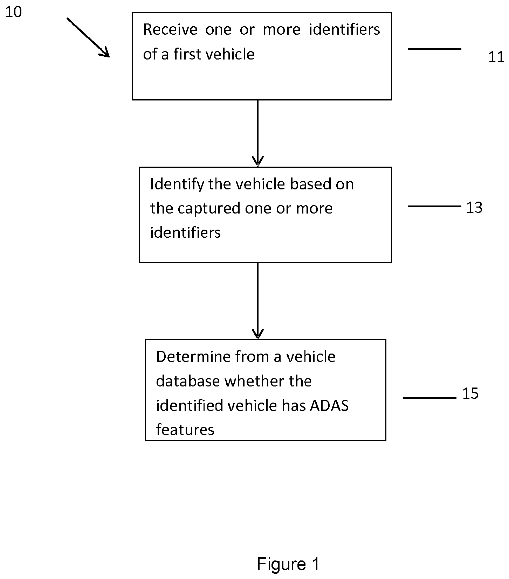

Figure 1 is a flowchart illustrating a method 10 of determining Advanced Driver Assistance Systems (ADAS) features, according to an embodiment of the present invention. Referring to Figure 1, the method 10 comprises: receiving one or more identifiers of a vehicle 11; identify the vehicle based on the one or more identifiers 13; and determine from a vehicle database whether the identified vehicle has ADAS features 15.

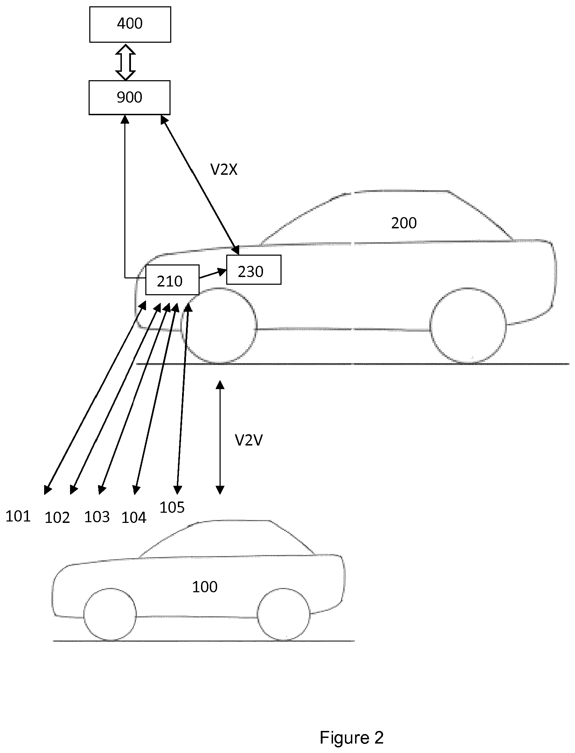

Figure 2 is a block diagram illustrating a system for determining ADAS features, according to an embodiment of the present invention. Referring to Figure 2, the system 100 may comprise an ANPR imaging device 210 installed in a second vehicle 200. The second vehicle 200 may be a Highly Autonomous Vehicle (HAV). The ANPR imaging device 210 is configured to capture one or more identifiers of a first vehicle 100. Referring to Figure 2, the one or more identifiers of the first vehicle 100 may comprise a full vehicle registration number 101, vehicle make 102, vehicle model 103, vehicle colour 104, and a partial vehicle registration number 105. A computing device 900 is configured to communicate with the ANPR imaging device 210. The computing device 900 is configured to receive the one or more identifiers of the first vehicle 100 and identify the first vehicle 100 based on the captured identifiers. In this regard, the computing device 900 may comprise one or more processors for performing the processing tasks. The computing device 900 may reside on a cloud-based computer as described later. ADAS features, and optionally critical technical data, for the identified first vehicle 100 may be obtained from a vehicle database 400. The vehicle database 400 may also reside on a cloud-based computer. A sufficient number of identifiers of the first vehicle 100 may enable the computing device 900 to interrogate the vehicle database 400 to identify the first vehicle 100. Once the first vehicle 100 is identified, it is determined whether the first vehicle 100 has ADAS features or not. The result of determining whether the identified first vehicle 100 has ADAS features may be transmitted to the second vehicle 200 via a Vehicle-to-External (V2X) communication capability. The result of determining may be transmitted in real time or transmitted regularly by the computing device 900 to the second vehicle 200. The ADAS features of the first vehicle 100 may be transmitted to the second vehicle 200, for example to a computing device 230 of the second vehicle 200. In this regard, it will be understood that the computing device 230 of the second vehicle 200 is a computing device comprising at least one procesor such as an Engine Control Unit (ECU). In this regard, if it is determined that the first vehicle 100 has ADAS features, this determination may be transmitted to the computing device 230 of the second vehicle 200.

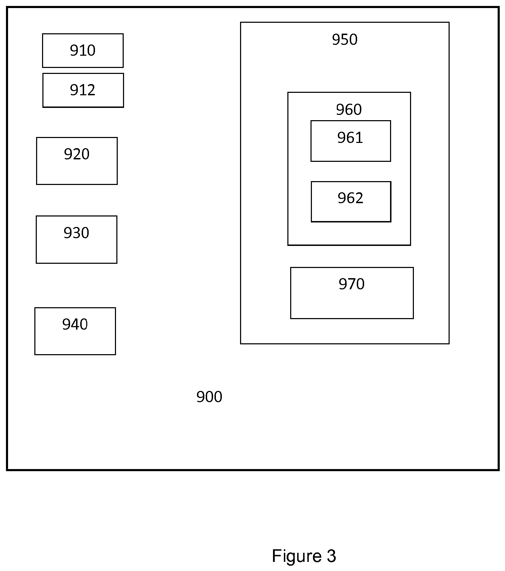

In another embodiment, instead of the second vehicle 200 receiving information, including ADAS information, from a cloud-based computer via V2X communication capability, the second vehicle 200 may receive information, including ADAS information, from the first vehicle 100 directly via a Vehicle-to-Vehicle (V2V) communication capability. In this embodiment, the second vehicle 200 does not require an ANPR imaging device. In this regard, the first vehicle 100 may have been pre-fitted with a communication device. In this embodiment, the computing device 230 disposed in the second vehicle 200 may perform the processing functions to identify the first vehicle 100 and determine ADAS features of the first vehicle 100. In this embodiment, it will be understood that the computing device 900 illustrated in Figure 3 corresponds to the computing device 230 as illustrated in Figure 2.

The vehicle database 400 may comprise a list of Vehicle Identification Numbers (VIN) cross-referenced to Vehicle Manufacturer Data. The vehicle database 400 may comprise vehicle makes and models with ADAS attributes. The vehicle database 400 may comprise vehicle makes and models with no ADAS attributes. In effect, a vehicle dataset stored in the vehicle database 400 corresponding to the first vehicle 100 may be made available to the second vehicle 200 via software which reads the results of an ANPR system via the ANPR imaging device 210 mounted in the second vehicle 200. The ANPR system comprises the ANPR imaging device 210 and an ANPR processor. The ANPR imaging device 210 and the ANPR processor may be integral in the second vehicle 200. In a preferred embodiment, the ANPR imaging device 210 is disposed in the second vehicle 200 and the ANPR processor is located in the computing device 900.

The ANPR system adopts an Optical Character Recognition system configured to read the vehicle registration plate of the first vehicle 100, or any other stationary or moving vehicle around the second vehicle 200. The ANPR system may also be configured to determine the make and model attributes, year of manufacture and colour of the first vehicle 100 or any other adjacent stationary or moving vehicle. The one or more identifiers of the first vehicle 100 may comprise one or more of a full or partial vehicle registration number, make, model, and colour of the vehicle. The ANPR system may require at least two visible digits of the vehicle registration plate to help identify the first vehicle 100. The first vehicle 100 may be identified based on a partial vehicle registration number and at least one other identifier comprising a make, model, and colour of the vehicle. The first vehicle 100 may be identified as having a Vehicle Identification Number (VIN). A list of VINs is stored in the vehicle database 400. A VIN is a unique code, including a serial number, used by the automotive industry to identify individual motor vehicles, towed vehicles, motorcycles, scooters and mopeds, as defined in ISO 3779:2009. The ANPR system may also be configured to measure the tread-depth of any visible tyre on the first vehicle 100. That is, the ANPR imaging device 210 may be configured to capture the tread-depth of any visible tyre on the first vehicle 100. The ANPR processor may be configured to determine the tread-depth based on the captured image of the tread-depth. The determined tread depth helps determine stopping distances.

The datasets stored in the vehicle database 400 may be compiled by acquiring original Vehicle Manufacturer Data and compiling a list of ADAS features for each make and model of vehicle. This results in a list of different vehicle types with ADAS attributes according to make and model. The list may also include vehicle makes and models with no ADAS attributes. This list may then be further differentiated into two streams: vehicle makes and models where the ADAS attributes are standard and vehicle makes and models where the ADAS features are optional.

In cases where the ADAS features are optional, each individual vehicle of that make and model manufactured may be identified by its Vehicle Identification Number (VIN) and cross-referenced to its original manufacturer build sheet in the case of each vehicle to identify which vehicle was actually manufactured with ADAS features.

This results in a list of vehicles manufactured with ADAS features by VIN number which is matched to the Vehicle Registration Number for each vehicle. Other vehicular specifications may be applied to the data held in the dataset for each vehicle. Such specifications may include vehicle dimensions, vehicle weight, power, acceleration, vehicle stopping distance in different weather conditions, and most recent change of owner of vehicle.

The data for the first vehicle 100 stored in the database 400 may be made available to the computing device 230 of the second vehicle 200 via software which reads the data retrieved via the ANPR system comprising the ANPR imaging device 210 on the second vehicle 200.

Accordingly, an ANPR solution may be applied to differentiate between the individual attributes of a particular vehicle in the ambit of the first vehicle 100 other than physical attributes.

The method and system of the present invention permits a HAV to have full visibility of the ADAS features of a vehicle within its ambit. This has various implications as follows. By virtue of the methodology of the present invention, the HAV can differentiate between vehicles which have ADAS features over vehicles which do not have ADAS features. The HAV can determine what ADAS features are available to any vehicle within its ambit. Such determination permits the HAV to estimate with accuracy how that vehicle will react in the event the HAV requires a sudden change of direction or speed to avoid a collision with another vehicle which has ADAS features or which does not have ADAS features or any other obstacle. The HAV can determine if any vehicle within its ambit requires human intervention or does not require human intervention in any particular instance involving a sudden change of direction or speed to avoid a collision with another vehicle with ADAS features or which does not have ADAS features or with any other obstacle. The HAV can determine the gross vehicle weight and dimensions of any vehicle within its ambit, which allows the HAV to estimate the stopping distance of that vehicle. The HAV can determine the estimated stopping distance of any vehicle within its ambit in a particular weather condition, which allows the HAV to estimate the stopping distance of that vehicle. The HAV can determine whether there has been effected a recent change of ownership of any vehicle within its ambit. If it has been determined that there has been a recent change of ownership of a vehicle, the HAV can make adjustments for the likelihood that a novice driver unfamiliar with the vehicle is in control of that vehicle. As the ANPR system may be configured to measure the tread-depth of any visible tyre on the first vehicle 100, the HAV can consequently make adjustments when determining the estimated stopping distance of the first vehicle 100. As a result of identifying any vehicles within its ambit, the HAV can determine the exact dimensions of such vehicles which can assist with overtaking manoeuvres of the HAV. Access to acceleration data of another vehicle will help the HAV to determine how quickly another vehicle may engage in an overtaking manoeuvre. Access to the dimensions of other vehicles within the ambit of the HAV can also assist with parking of the HAV. Determining the gross vehicle weight and vehicle dimensions of a vehicle within its ambit can assist the HAV to determine the likely damage to another vehicle immediately following an impact between the HAV and that other vehicle and to send that information to emergency services. This has application in the case of emergency assistance features which automatically communicate road traffic collisions to emergency services. Currently in the event of collisions, only information about the vehicle sending the information is sent to the emergency services. All data from the impact between the HAV and that other vehicle can be stored as a repository of information. The data can be recalled by a HAV in future when an identical impact involving the same vehicle types is imminent, meaning the information can be used in real time decision-making of the HAV prior to an impact. This adds to the repository of information available to HAV software engineers charged with the responsibility of coding for HAV responses in emergency situations. Determining the make and model of the vehicle in front of the HAV will determine whether that other vehicle is a bus and whether that vehicle is likely to have to stop at a bus stop nearby. Access to vehicular information of the other vehicle will assist the HAV to determine which lights on the rear of a vehicle in front of the HAV are the brake lights of that vehicle.

The method and system of the present invention permits a HAV to have a greater understanding of the vehicles in its ambit and permits the HAV to make requisite adjustments to its speed and direction in the event the HAV requires a sudden change of direction or speed to avoid a collision with another vehicle which has ADAS features or which does not have ADAS features or any other obstacle.

The method and system of the present invention employs an ANPR imaging device configured to read both the vehicle registration plate of any stationary or moving vehicle around a HAV and also the make and model attributes and year of manufacture and colour of any stationary or moving vehicle around the HAV.

This permits both a full and a partial reading of any vehicle registration plate to trigger a response via the camera and retrieve the relevant vehicle information from the dataset.

The method and system of the present invention may become requisite for all OEMs which supply software solutions to a HAV.

Figure 3 is a block diagram illustrating a configuration of the computing device 900 of Figure 2. The computing device 900 includes various hardware and software components that function to perform processes according to the present invention. The computing device 900 may be embodied as one of numerous general purpose or special purpose computing system environments or configurations. Examples of well-known computing systems, environments, and/or configurations that may be suitable for use with the present invention include, but are not limited to, personal computers, server computers, cloud computing, hand-held or laptop devices, multiprocessor systems, microprocessor, microcontroller or microcomputer based systems, set top boxes, programmable consumer electronics, ASIC or FPGA core, DSP core, network PCs, minicomputers, mainframe computers, distributed computing environments that include any of the above systems or devices, and the like.

Referring to Figure 3, the computing device 900 comprises a user interface 910, a processor 920 in communication with a memory 950, and a communication interface 930. The processor 920 functions to execute software instructions that can be loaded and stored in the memory 950. The processor 920 may include a number of processors, a multi-processor core, or some other type of processor, depending on the particular implementation. The processor 920 may include an ANPR processor. The memory 950 may be accessible by the processor 920, thereby enabling the processor 920 to receive and execute instructions stored on the memory 950. The memory 950 may be, for example, a random access memory (RAM) or any other suitable volatile or non-volatile computer readable storage medium. In addition, the memory 950 may be fixed or removable and may contain one or more components or devices such as a hard drive, a flash memory, a rewritable optical disk, a rewritable magnetic tape, or some combination of the above.

One or more software modules 960 may be encoded in the memory 950. The software modules 960 may comprise one or more software programs or applications having computer program code or a set of instructions configured to be executed by the processor 920. Such computer program code or instructions for carrying out operations for aspects of the systems and methods disclosed herein may be written in any combination of one or more programming languages.

The software modules 960 may include at least a first application 961 and a second application 962 configured to be executed by the processor 920. During execution of the software modules 960, the processor 920 configures the computing device 900 to perform various operations relating to the embodiments of the present invention, as has been described above.

Other information and/or data relevant to the operation of the present systems and methods, such as a database 970, may also be stored on the memory 950. The database 970 may contain and/or maintain various data items and elements that are utilized throughout the various operations of the system described above. It should be noted that although the database 970 is depicted as being configured locally to the computing device 900, in certain implementations the database 970 and/or various other data elements stored therein may be located remotely. Such elements may be located on a remote device or server - not shown, and connected to the computing device 900 through a network in a manner known to those skilled in the art, in order to be loaded into a processor and executed. In Figure 2, the vehicle database 400 is illustrated as being remote to the computing device 900, but it will be understood that the vehicle database 400 may be integral with the computing device 900. In such an embodiment, the database 970 may comprise the vehicle database as described above.

Further, the program code of the software modules 960 and one or more computer readable storage devices (such as the memory 950) form a computer program product that may be manufactured and/or distributed in accordance with the present invention, as is known to those of skill in the art.

The communication interface 940 is also operatively connected to the processor 920 and may be any interface that enables communication between the computing device 900 and other devices, machines and/or elements. The communication interface 940 is configured for transmitting and/or receiving data. For example, the communication interface 940 may include but is not limited to a Bluetooth (RTM), or cellular transceiver, a satellite communication transmitter/receiver, an optical port and/or any other such, interfaces for wirelessly connecting the computing device 900 to the other devices.

The user interface 910 is also operatively connected to the processor 920. The user interface may comprise one or more input device(s) such as switch(es), button(s), key(s), and a touchscreen.

The user interface 910 functions to facilitate the capture of commands from the user such as an on-off commands or settings related to operation of the system described above. The user interface 910 may function to issue remote instantaneous instructions on images received via a non-local image capture mechanism.

A display 912 may also be operatively connected to the processor 920. The display 912 may include a screen or any other such presentation device that enables the user to view various options, parameters, and results. The display 912 may be a digital display such as an LED display. The user interface 910 and the display 912 may be integrated into a touch screen display.

The computing device 900 may reside on a remote cloud-based computer. In this embodiment, the second vehicle 200 communicates with the computing device 900 via a Vehicle-to-External (V2X) communication capability. Accordingly, the software adapted to implement the system and methods of the present invention can also reside in the cloud. Cloud computing provides computation, software, data access and storage services that do not require end-user knowledge of the physical location and configuration of the system that delivers the services. Cloud computing encompasses any subscription-based or pay-per-use service and typically involves provisioning of dynamically scalable and often virtualised resources. Cloud computing providers deliver applications via the Internet, which can be accessed from a web browser, while the business software and data are stored on servers at a remote location.

In another embodiment, as described above, the computing device 900 may be disposed in the second vehicle 200 and the first vehicle 100 communicates with second vehicle 200 via a Vehicle-to-Vehicle (V2V) communication capability. In this embodiment, it will be understood that the computing device 900 corresponds to the computing device 230 as illustrated in Figure 2.

In the cloud embodiment of the computing device 900, the software modules 960 and processor 920 may be remotely located on the cloud-based computer.

The operation of the computing device 900 and the various elements and components described above will be understood by those skilled in the art with reference to the method and system according to the present invention.

The present invention is not limited to the embodiment(s) described herein but can be amended or modified without departing from the scope of the present invention. Additionally, it will be appreciated that in embodiments of the present invention some of the above-described steps may be omitted and/or performed in an order other than that described.

Similarly the words comprises/comprising when used in the specification are used to specify the presence of stated features, integers, steps or components but do not preclude the presence or addition of one or more additional features, integers, steps, components or groups thereof.

## Claims

1. A method for determining Advanced Driver Assistance Systems features in a first vehicle (100), and making adjustments to the speed and direction of an autonomous second vehicle (200), the method comprising:
operating a computing device, the computing device configured to:
receive one or more identifiers of the first vehicle (100);
identify the first vehicle (100) based on the one or more identifiers; and
determine from a vehicle database (400) whether the identified first vehicle (100) has Advanced Driver Assistance Systems (ADAS) features;
wherein the autonomous second vehicle (200) is configured to:
determine the ADAS features of the first vehicle (100) which is within the ambit of the autonomous second vehicle (200); and
in the event the autonomous second vehicle (200) requires a sudden change of direction or speed in order to avoid a collision with another vehicle which has ADAS features or which does not have ADAS features or any other obstacle:
- estimate how the first vehicle will react based on the determined ADAS features of the first vehicle (100); and
- make requisite adjustments to the speed and direction of the autonomous second vehicle (200).

2. The method of claim 1, wherein the computing device resides on a cloud-based computer, the method comprising transmitting the result of determining whether the identified first vehicle (100) has ADAS features to the autonomous second vehicle (200)
and, optionally, wherein the autonomous second vehicle (200) communicates with the computing device via a Vehicle-to-External communication capability.

3. The method of claim 1, wherein the computing device is disposed in the autonomous second vehicle (200) and, optionally, the method comprising receiving the result of determining whether the identified first vehicle has Advanced Driver Assistance Systems features at the autonomous second vehicle (200).

4. The method of any of claims 1 to 3, wherein the autonomous second vehicle (200) is a Highly Autonomous Vehicle.

5. The method of any preceding claim, wherein the one or more identifiers comprise one or more of a full or partial vehicle registration number, make (102), model (103), and colour (104) of the first vehicle (100).

6. The method of any preceding claim, comprising identifying the first vehicle based on a partial vehicle registration number (105) and at least one other identifier comprising a make (102), model (103), and colour (104) of the first vehicle (100) and/or identifying the first vehicle (100) as having a specific Vehicle Identification Number.

7. The method of any preceding claim, wherein the vehicle database comprises a list of Vehicle Identification Numbers cross-referenced to Vehicle Manufacturer Data.

8. The method of claim 7, wherein the vehicle database comprises vehicle makes and models with Advanced Driver Assistance Systems attributes and/or vehicle makes and models with no Advanced Driver Assistance Systems attributes.

9. The method of any of claims 3 to 8, wherein the second vehicle communicates with the first vehicle via a Vehicle-to-Vehicle communication capability.

10. The method of any preceding claim, wherein the one or more identifiers of the first vehicle are captured using an Automatic Number Plate Recognition imaging device installed in the second vehicle and, optionally, wherein the one or more identifiers comprises of a full or partial vehicle registration number, make, model, colour, and a tread-depth of any visible tyre on the first vehicle captured using the Automatic Number Plate Recognition imaging device.

11. The method of any preceding claim, comprising determining, by the computing device, that the identified first vehicle (100) is a Highly Autonomous Vehicle.

12. The method of any of claims 1 to 10, comprising determining, by the computing device, that the identified first vehicle (100) is not a Highly Autonomous Vehicle.

13. The method of claim 12, wherein, it is determined that the first vehicle is equipped with Advanced Driver Assistance Systems features or it is determined that the first vehicle is not equipped with Advanced Driver Assistance Systems features.

14. A system comprising:
a vehicle database comprising a list of Vehicle Identification Numbers cross-referenced to Vehicle Manufacturer Data;
a computing device and an autonomous second vehicle configured to carry out the method of any of claims 1-13.

## Patentansprüche

1. Verfahren zur Bestimmung der Merkmale fortgeschrittener Fahrerassistenzsysteme in einem ersten Fahrzeug (100) und zum Vornehmen von Anpassungen der Geschwindigkeit und Richtung eines autonomen zweiten Fahrzeugs (200), wobei das Verfahren Folgendes umfasst:
Betreiben einer Rechenvorrichtung, wobei die Rechenvorrichtung konfiguriert ist, um:
eine oder mehrere Kennungen des ersten Fahrzeugs (100) zu empfangen;
das erste Fahrzeug (100) basierend auf der einen oder den mehreren Kennungen zu identifizieren; und
aus einer Fahrzeugdatenbank (400) zu bestimmen, ob das identifizierte erste Fahrzeug (100) über Merkmale fortgeschrittener Fahrerassistenzsysteme (ADAS) verfügt;
wobei das autonome zweite Fahrzeug (200) konfiguriert ist, um:
die ADAS-Merkmale des ersten Fahrzeugs (100), das sich in der Umgebung des autonomen zweiten Fahrzeugs (200) befindet, zu bestimmen; und
für den Fall, dass das autonome zweite Fahrzeug (200) eine plötzliche Richtungs- oder Geschwindigkeitsänderung benötigt, um eine Kollision mit einem anderen Fahrzeug, das über ADAS-Merkmale verfügt oder nicht über ADAS-Merkmale verfügt, oder mit einem anderen Hindernis zu vermeiden:
abzuschätzen, wie das erste Fahrzeug basierend auf der bestimmten ADAS-Merkmale des ersten Fahrzeugs (100) reagieren wird; und
erforderliche Anpassungen der Geschwindigkeit und Richtung des autonomen zweiten Fahrzeugs (200) vorzunehmen.

2. Verfahren nach Anspruch 1, wobei sich die Rechenvorrichtung auf einem cloudbasierten Computer befindet, das Verfahren Übertragen des Ergebnisses des Bestimmens, ob das identifizierte erste Fahrzeug (100) ADAS-Merkmale aufweist, an das autonome zweite Fahrzeug (200) umfasst
und wobei das autonome zweite Fahrzeug (200) optional mit der Rechenvorrichtung über eine Fahrzeug-zu-extern-Kommunikationsfähigkeit kommuniziert.

3. Verfahren nach Anspruch 1, wobei die Rechenvorrichtung in dem autonomen zweiten Fahrzeug (200) angeordnet ist und das Verfahren optional Empfangen des Ergebnisses des Bestimmens, ob das identifizierte erste Fahrzeug über Merkmale fortgeschrittener Fahrerassistenzsysteme verfügt, in dem autonomen zweiten Fahrzeug (200), umfasst.

4. Verfahren nach einem der Ansprüche 1 bis 3, wobei das autonome zweite Fahrzeug (200) ein hochautonomes Fahrzeug ist.

5. Verfahren nach einem der vorhergehenden Ansprüche, wobei die eine oder die mehreren Kennungen eines oder mehrere der folgenden Elemente umfassen: vollständiges oder unvollständiges Kennzeichen, Marke (102), Modell (103) oder Farbe (104) des ersten Fahrzeugs (100).

6. Verfahren nach einem der vorhergehenden Ansprüche, umfassend Identifizieren des ersten Fahrzeugs basierend auf einem unvollständigen Kennzeichens (105) und mindestens einer anderen Kennung, umfassend eine Marke (102), ein Modell (103) und eine Farbe (104) des ersten Fahrzeugs (100) und/oder Identifizieren des ersten Fahrzeugs (100) als ein Fahrzeug mit einer bestimmten Fahrzeugidentifizierungsnummer.

7. Verfahren nach einem der vorhergehenden Ansprüche, wobei die Fahrzeugdatenbank eine Liste von Fahrzeugidentifizierungsnummern mit Querverweisen auf Fahrzeugherstellerdaten umfasst.

8. Verfahren nach Anspruch 7, wobei die Fahrzeugdatenbank Fahrzeugmarken und -modelle mit Merkmalen fortgeschrittener Fahrerassistenzsysteme und/oder Fahrzeugmarken und -modelle ohne Merkmale fortgeschrittener Fahrerassistenzsysteme umfasst.

9. Verfahren nach einem der Ansprüche 3 bis 8, wobei das zweite Fahrzeug mit dem ersten Fahrzeug über eine Fahrzeug-zu-Fahrzeug-Kommunikationsfähigkeit kommuniziert.

10. Verfahren nach einem der vorhergehenden Ansprüche, wobei die eine oder die mehreren Kennungen des ersten Fahrzeugs mithilfe einer Bildgebungsvorrichtung für automatische Nummernschilderkennung, die in dem zweiten Fahrzeug installiert ist, erfasst werden und wobei die eine oder die mehreren Kennungen optional ein vollständiges oder unvollständiges Kennzeichen, die Marke, das Modell, die Farbe und eine Profiltiefe jedes sichtbaren Reifens des ersten Fahrzeugs umfassen, die mithilfe der Bildgebungsvorrichtung für automatische Nummernschilderkennung erfasst werden.

11. Verfahren nach einem der vorhergehenden Ansprüche, umfassend Bestimmen durch die Rechenvorrichtung, dass das identifizierte erste Fahrzeug (100) ein hochautonomes Fahrzeug ist.

12. Verfahren nach einem der Ansprüche 1 bis 10, umfassend Bestimmen durch die Rechenvorrichtung, dass das identifizierte erste Fahrzeug (100) kein hochautonomes Fahrzeug ist.

13. Verfahren nach Anspruch 12, wobei bestimmt wird, dass das erste Fahrzeug mit Merkmalen fortgeschrittener Fahrerassistenzsysteme ausgestattet ist, oder bestimmt wird, dass das erste Fahrzeug nicht mit Merkmalen fortgeschrittener Fahrerassistenzsysteme ausgestattet ist.

14. System, umfassend:
eine Fahrzeugdatenbank, umfassend eine Liste von Fahrzeugidentifizierungsnummern mit Querverweisen auf Fahrzeugherstellerdaten;
eine Rechenvorrichtung und ein autonomes zweites Fahrzeug, die konfiguriert sind, um das Verfahren nach einem der Ansprüche 1-13 durchzuführen.

## Revendications

1. Procédé permettant de déterminer des fonctionnalités de systèmes avancés d'aide au conducteur dans un premier véhicule (100) et de réaliser des ajustements de la vitesse et de la direction d'un second véhicule autonome (200), le procédé comprenant :
l'exploitation d'un dispositif informatique, le dispositif informatique étant configuré pour :
recevoir un ou plusieurs identifiants du premier véhicule (100) ;
identifier le premier véhicule (100) sur la base des un ou plusieurs identifiants ; et
déterminer à partir d'une base de données de véhicules (400) si le premier véhicule (100) identifié dispose de fonctionnalités de systèmes avancés d'aide au conducteur (ADAS) ;
dans lequel le second véhicule autonome (200) est configuré pour :
déterminer les fonctionnalités ADAS du premier véhicule (100) qui se trouve au sein du périmètre du second véhicule autonome (200) ; et
dans le cas où le second véhicule autonome (200) nécessite un changement brusque de direction ou de vitesse afin d'éviter une collision avec un autre véhicule doté de fonctionnalités ADAS ou non doté de fonctionnalités ADAS ou un quelconque autre obstacle :
- estimer comment le premier véhicule réagira en fonction des fonctionnalités ADAS déterminées du premier véhicule (100) ; et
- réaliser les ajustements nécessaires à la vitesse et à la direction du second véhicule autonome (200).

2. Procédé selon la revendication 1, dans lequel le dispositif informatique réside sur un ordinateur basé sur le nuage, le procédé comprenant la transmission du résultat de la détermination établissant si le premier véhicule (100) identifié est doté de fonctionnalités ADAS au second véhicule autonome (200)
et, éventuellement, dans lequel le second véhicule autonome (200) communique avec le dispositif informatique par l'intermédiaire d'une capacité de communication véhicule-à-extérieur.

3. Procédé selon la revendication 1, dans lequel le dispositif informatique est disposé dans le second véhicule autonome (200) et, éventuellement, le procédé comprenant la réception du résultat de la détermination établissant si le premier véhicule identifié est doté des fonctionnalités de systèmes avancés d'assistance au conducteur au niveau du second véhicule autonome (200).

4. Procédé selon l'une quelconque des revendications 1 à 3, dans lequel le second véhicule autonome (200) est un véhicule hautement autonome.

5. Procédé selon une quelconque revendication précédente, dans lequel les un ou plusieurs identifiants comprennent l'un ou plusieurs d'un numéro d'immatriculation de véhicule complet ou partiel, d'une marque (102), d'un modèle (103) et d'une couleur (104) du premier véhicule (100).

6. Procédé selon une quelconque revendication précédente, comprenant l'identification du premier véhicule sur la base d'un numéro d'immatriculation partiel de véhicule (105) et d'au moins un autre identifiant comprenant une marque (102), un modèle (103) et une couleur (104) du premier véhicule (100) et/ou l'identification du premier véhicule (100) comme ayant un numéro d'identification de véhicule spécifique.

7. Procédé selon une quelconque revendication précédente, dans lequel la base de données de véhicules comprend une liste de numéros d'identification de véhicules référencés de manière croisée avec les données de fabricant de véhicules.

8. Procédé selon la revendication 7, dans lequel la base de données de véhicules comprend des marques et des modèles de véhicules avec des attributs de systèmes avancés d'assistance au conducteur et/ou des marques et des modèles de véhicules sans attributs de systèmes avancés d'assistance au conducteur.

9. Procédé selon l'une quelconque des revendications 3 à 8, dans lequel le second véhicule communique avec le premier véhicule par l'intermédiaire d'une capacité de communication de véhicule à véhicule.

10. Procédé selon une quelconque revendication précédente, dans lequel les un ou plusieurs identifiants du premier véhicule sont capturés en utilisant un dispositif d'imagerie de reconnaissance automatique de plaques d'immatriculation installé dans le second véhicule et, éventuellement, dans lequel les un ou plusieurs identifiants comprennent un numéro d'immatriculation de véhicule complet ou partiel, une marque, un modèle, une couleur et une profondeur de bande de roulement d'un quelconque pneu visible sur le premier véhicule capturés en utilisant le dispositif d'imagerie de reconnaissance automatique de plaques d'immatriculation.

11. Procédé selon une quelconque revendication précédente, comprenant la détermination, par le dispositif informatique, que le premier véhicule (100) identifié est un véhicule hautement autonome.

12. Procédé selon l'une quelconque des revendications 1 à 10, comprenant la détermination, par le dispositif informatique, que le premier véhicule (100) identifié n'est pas un véhicule hautement autonome.

13. Procédé selon la revendication 12, dans lequel il est déterminé que le premier véhicule est équipé de fonctionnalités de systèmes avancés d'assistance au conducteur ou il est déterminé que le premier véhicule n'est pas équipé de fonctionnalités de systèmes avancés d'assistance au conducteur.

14. Système comprenant :
une base de données de véhicules comprenant une liste de numéros d'identification de véhicules référencés de manière croisée avec les données de fabricant de véhicules ;
un dispositif informatique et un second véhicule autonome configurés pour mettre en œuvre le procédé selon l'une quelconque des revendications 1 à 13.
